# EUROPEAN PATENT SPECIFICATION

(11) **EP 3 623 042 B1**
(45) Date of publication and mention of the grant of the patent: **01.05.2024**
(21) Application number: 19197167.0
(22) Date of filing: 13.09.2019
(51) Int. Cl.: B01J 20/02, B01J 20/34

(54) **RECHARGE SOLUTION FOR ZIRCONIUM OXIDE**
AUFLADELÖSUNG VON ZIRKONOXID
SOLUTION POUR LA RECHARGE D'OXYDE DE ZIRCONIUM

(30) Priority: 14.09.2018 IN 201841034668
(43) Date of publication of application: 18.03.2020
(73) Proprietor: Mozarc Medical US LLC, Minneapolis, MN 55431 (US)
(72) Inventor: DUTTA, Sukalyan, 560067 Bangalore (IN); PUDIL, Bryant J., Plymouth, MN Minnesota 55447 (US); NELLIKUNJE, Krishnaraja, 560066 Bangalore (IN); HOBOT, Christopher M., Rogers, MN Minnesota 55374 (US)
(74) Representative: Maschio & Soames IP Ltd

(56) References cited:
- US-A1- 2014 262 812
- US-A1- 2016 236 188
- US-A1- 2016 243 540

## Description

### FIELD OF THE INVENTION

The invention relates to systems, and methods that can generate a required recharge solution for recharging zirconium oxide by introducing recharging constituent components through a recharging device. Reusable sorbent modules can contain the zirconium oxide to be recharged. The systems and methods can mix one or more solutions to generate the recharge solution having specified concentrations of hydroxide and free chlorine for recharging and disinfecting the zirconium oxide inside the reusable module.

### BACKGROUND

Zirconium oxide is used in sorbent dialysis to remove waste and unwanted solutes including phosphate anions. The zirconium oxide is generally packed in a sorbent cartridge, which is discarded and replaced after use. The discarded sorbent cartridges are broken down and the zirconium oxide is separated from the other sorbent materials. Because zirconium oxide is expensive and rechargeable, sorbent re-processers treat the recovered materials with chemical solutions. The recycling process requires transporting the materials to reprocessing facilities and involves laborious recycling steps in addition to recharging the sorbent materials. Further, the sorbent material cannot be immediately reused, and must be added to a new sorbent cartridge and repackaged for sale. Conventional methods drive up costs and infrastructure requirements and increase complexity and waste. Further, the recharge solutions used in conventional methods are generated by hand, introducing the possibility of human error. US2016236188 discloses a sorbent recharger for simultaneously recharging reusable modules, which has a disinfectant source, a base source, a water source, and a brine source that are fluidly connected to an inlet line. US2016243540 discloses a sorbent recharger having an inlet line fluidly connected to a sorbent module inlet, and a control system in communication with one of flow sensor, pressure sensor and temperature sensor or conductivity sensor and controlling pump.

Hence, there is a need for systems and methods of recharging zirconium oxide within reusable sorbent modules. The need extends to systems and methods for generating a recharge solution that can be introduced through the sorbent module to recharge and disinfect the zirconium oxide. The systems and methods should include methods that efficiently generate the recharge solution from constituent parts, reducing complexity and costs.

### SUMMARY OF THE INVENTION

The first aspect of the invention relates to a system according to claim 1. According to the invention, the system comprises a sorbent recharger comprising a recharging flow path comprising at least one receiving compartment for receiving a zirconium oxide sorbent module; the at least one receiving compartment comprising a zirconium oxide module inlet and a zirconium oxide module outlet; at least one recharge solution source comprising a hydroxyl source and a free chlorine source fluidly connectable to the recharging flow path; and a controller controlling at least one pump to introduce fluid from the at least one recharge solution source through the zirconium oxide sorbent module.

In any embodiment, the hydroxyl source can be a sodium hydroxide, a lithium hydroxide, or a potassium hydroxyl source, and the free chlorine source can be a sodium hypochlorite, potassium hypochlorite, trichloroisocyanuric acid, or chloramine source.

In any embodiment, the system can comprise a mixer fluidly connected or in the recharging flow path upstream of the zirconium oxide module inlet.

According to the invention, the at least one recharge solution source comprises a concentrated source of hydroxide and free chlorine; the recharging flow path is fluidly connectable to a water source upstream of the zirconium oxide module inlet; and the controller controls a flow rate of hydroxide and free chlorine and a flow rate of water to generate a recharge solution having a specified concentration of hydroxide and free chlorine.

In any embodiment, the at least one recharge solution source can comprise a first recharge solution source of a saturated hydroxide solution and a second recharge solution source of a concentrated free chlorine solution; the system can comprise a water source fluidly connectable to the recharging flow path upstream of the zirconium oxide module inlet; and the controller can control a flow rate of water from the water source, a flow rate of free chlorine solution from the second recharge solution source, and a flow rate of hydroxide solution from the first recharge solution source to generate a recharge solution having a specified concentration of hydroxide and free chlorine.

In any embodiment, the first recharge solution source comprising saturated hydroxide solution can be generated by adding water to a source of a solid hydroxide; wherein an amount of water added to the source of solid hydroxide is less than an amount of water necessary to dissolve all solid hydroxide in the first recharge solution source.

In any embodiment, the at least one recharge solution source can comprise a first recharge solution source containing concentrated free chlorine solution and a second recharge solution source comprising an electrolysis system; the electrolysis system generating a hydroxide solution by electrolysis of a salt solution; wherein a controller can control a flow rate of the free chlorine solution from the first recharge solution source, and a flow rate of hydroxide solution from the second recharge solution source to generate a recharge solution having a specified concentration of hydroxide and free chlorine.

In any embodiment, the system comprises a water source fluidly connected to the recharging flow path upstream of the zirconium oxide module inlet; and a controller that can control a flow rate of water from the water source to generate the recharge solution having a specified concentration of hydroxide and free chlorine.

In any embodiment, the system can comprise at least one sensor in the recharging flow path, the at least one sensor in communication with a controller; the controller measuring a concentration of hydroxide and free chlorine in the recharge solution based on data from the at least one sensor.

In any embodiment, the at least one sensor can comprise a conductivity sensor.

In any embodiment, the at least one sensor can comprise a pH sensor.

In any embodiment, the system can comprise a second recharging flow path comprising a second receiving compartment for a zirconium oxide sorbent module; the second receiving compartment comprising a zirconium oxide module inlet and a zirconium oxide module outlet; and at least a second recharge solution source; the at least second recharge solution source containing sodium solution and acid.

In any embodiment, at least one recharge solution source can comprise a partitioned bag containing a solid hydroxyl source or a solid free chlorine source.

The features disclosed as being part of the first aspect of the invention can be in the first aspect of the invention, either alone or in combination, or follow a preferred arrangement of one or more of the described elements.

The second aspect of the invention is drawn to a method according to claim 10. The method comprises the steps of generating a recharge solution of hydroxide and free chlorine having a specified concentration of hydroxide and free chlorine; and recharging zirconium oxide in a zirconium oxide sorbent module by introducing the recharge solution through the zirconium oxide sorbent module.

In any embodiment, the hydroxide can be potassium hydroxide, lithium hydroxide, or sodium hydroxide, and the free chlorine can be sodium hypochlorite, potassium hypochlorite, trichloroisocyanuric acid, or chloramine.

In any embodiment, the step of generating the recharge solution of hydroxide and free chlorine can comprise introducing a concentrated hydroxide and free chlorine solution and water into a recharging flow path; and introducing a resulting solution through the zirconium oxide sorbent module.

In any embodiment, the step of generating the recharge solution of hydroxide and free chlorine can comprise introducing a saturated hydroxide solution, a concentrated free chlorine solution, and water into a recharging flow path; and introducing a resulting solution through the zirconium oxide sorbent module.

In any embodiment, the method can comprise the step of generating the saturated hydroxide solution by adding water to a solid hydroxide in a recharge solution source.

In any embodiment, the step of generating the recharge solution of hydroxide and free chlorine can comprise generating a hydroxide solution by electrolysis in a recharge solution source; introducing the hydroxide solution and a free chlorine solution into a recharging flow path; and introducing a resulting solution through the zirconium oxide sorbent module.

In any embodiment, the method can comprise the step of introducing water into the recharging flow path to generate the recharge solution of hydroxide and free chlorine having the specified concentration of hydroxide and free chlorine.

In any embodiment, the method can comprise the step of measuring a hydroxide and free chlorine concentration in the recharge solution.

In any embodiment, the method can comprise adjusting a flow rate of at least one fluid used in generating the recharge solution of hydroxide and free chlorine if the sodium hydroxide and free chlorine concentration in the recharge solution is outside of a predetermined range.

In any embodiment, the step of measuring the hydroxide and free chlorine concentration can comprise using one or more conductivity sensors.

In any embodiment, the step of generating the recharge solution of hydroxide and free chlorine can comprise generating a saturated hydroxide solution or a saturated free chlorine solution; and wherein either or both of the saturated hydroxide solution and the saturated free chlorine solution is generated by adding water to a solid hydroxyl source or a solid free chlorine source in a partitioned bag.

In any embodiment, the method can be carried out by the system of the first aspect of the invention.

The features disclosed as being part of the second aspect of the invention can be in the second aspect of the invention, either alone or in combination, or follow a preferred arrangement of one or more of the described elements.

### BRIEF DESCRIPTION OF THE DRAWINGS

FIG. 1A shows a sorbent recharger for recharging zirconium oxide in a sorbent module.
FIG. 1B shows a sorbent recharger for recharging zirconium oxide and zirconium phosphate in sorbent modules.
FIG. 2 shows a zirconium oxide recharging flow path using a concentrated source of hydroxide and free chlorine.
FIG. 3 shows a zirconium oxide recharging flow path using a saturated source of hydroxide and a concentrated source of free chlorine.
FIG. 4 shows a zirconium oxide recharging flow path using an electrolysis system to generate a hydroxide solution and a concentrated source of free chlorine.
FIG. 5 shows a zirconium oxide recharging flow path using partitioned bags to generate hydroxide and free chlorine solutions.

### DETAILED DESCRIPTION OF THE INVENTION

Unless defined otherwise, all technical and scientific terms used have the same meaning as commonly understood by one of ordinary skill in the art.

The articles "a" and "an" are used to refer to one or to over one (*i.e.,* to at least one) of the grammatical object of the article. For example, "an element" means one element or over one element.

An "acid" as used herein can be either a Lewis acid or a Bronsted-Lowry acid. A Lewis acid is a compound capable of accepting a lone pair of electrons. A Bronsted-Lowry acid is a compound capable of donating a hydrogen ion to another compound.

The term "adding" or to "add" refers to moving a substance, liquid, gas, or combination thereof into a reservoir, containing, or flow path.

The term "adjusting" or to "adjust" refers to changing any parameter of a system or process.

The phrase "based on" can refer to using information or data obtained by any means wherein the use can be of any form including performing calculations, determining values, transmitting values, measuring values, or processing the obtained information or data in any fashion known to those of skill in the art. For example, the phrase "based on data" can refer to performing a calculation or determining one or more value or variable using data.

The term "chloramine" refers to NH₂Cl, either in solution or solid form.

The term "chlorine in a +1 oxidation state" refers to a compound or ion containing chlorine atoms, wherein the chlorine atoms would have a hypothetical charge of +1 if all bonds were considered ionic.

The terms "communication" or "electronic communication" can refer to the ability to transmit electronic data, instructions, information wirelessly, via electrical connection, or any other electrical transmission between two components or systems.

The term "comprising" includes, but is not limited to, whatever follows the word "comprising." Use of the term indicates the listed elements are required or mandatory but that other elements are optional and may be present.

The term "concentrated" refers to a solution having at least one solute in concentration greater than another solute or the same at least one solute. For example, a first solute can have a high proportion relative to other solutes and/or have water or other diluting agent removed or reduced.

The term "concentration" refers to an amount of a first substance dissolved in a second substance. The term refers to a relative amount of a given substance contained within a solution or in a particular volume and can represent an amount of solute per unit volume of solution.

The term "conductivity sensor" refers to a device for measuring conductance, or the inverse of the electrical resistance, of a fluid or substance.

The term "consisting of" includes and is limited to whatever follows the phrase "consisting of." The phrase indicates the limited elements are required or mandatory and that no other elements may be present.

The term "consisting essentially of" includes whatever follows the term "consisting essentially of" and additional elements, structures, acts or features that do not affect the basic operation of the apparatus, structure or method described.

A "controller" can be a combination of components that act together to maintain a system to a desired set of performance specifications. The control system can use processors, memory and computer components configured to interoperate to maintain the desired performance specifications. The control system can also include fluid or gas control components, and solute control components as known within the art to maintain performance specifications.

The terms "control," "controlling," or "controls" refers to the ability of one component to direct the actions of a second component, element, or process.

The term "data" means any quantity, character, structure, or symbol for storing information of any type. The data can be transmitted in electrical form and recorded on magnetic, optical, or mechanical media.

The term "downstream" refers to a position of a first component in a flow path relative to a second component wherein fluid will pass by the second component prior to the first component during normal operation. The first component can be said to be "downstream" of the second component, while the second component is "upstream" of the first component.

"Electrolysis" refers to using an electrical current to drive a chemical reaction.

An "electrolysis system" is a set of components that use an electrical current to drive a chemical reaction.

The term "flow rate" refers to a volume of a fluid, gas, or combination thereof passing a specified point per unit of time.

The term "fluidly connectable" refers to the ability of providing for the passage of fluid, gas, or combination thereof, from one point to another point. The ability of providing such passage can be any connection, fastening, or forming between two points to permit the flow of fluid, gas, or combinations thereof. The two points can be within or between any one or more of compartments of any type, modules, systems, components, and rechargers.

The term "fluidly connected" refers to a particular state such that the passage of fluid, gas, or combination thereof, is provided from one point to another point. The connection state can also include an unconnected state, such that the two points are disconnected from each other to discontinue flow. It will be further understood that the two "fluidly connectable" points, as defined above, can from a "fluidly connected" state. The two points can be within or between any one or more of compartments, modules, systems, components, and rechargers, all of any type.

"Free chlorine" refers to a substance that can generate chlorine, hypochlorite ions, or hypochlorous acid either as a gas or in solution.

A "free chlorine source" refers to a source of a substance that can generate chlorine, hypochlorite ions, or hypochlorous acid either as a gas or in solution.

The terms "generate," "generating," "is generated," and the like refer to forming a solution or substance from constituent parts.

The term "hydroxide" refers to OH⁻ ions, either in solution or as part of a solid compound.

The term "hydroxyl source" refers to a fluid, solid, or concentrate containing a substance that comprises hydroxide anions.

The term "inlet" can refer to a portion of container, flow path, or component through which fluid, gas, or a combination thereof can be drawn into the container, flow path, or component.

The terms "introducing," "introduced," or to "introduce" refers to conveying or moving a fluid, a gas, or a combination thereof by any pressure, pressure differential, force, pumping action, displacement, or other motive force known to those of skill in the art.

The term "less than an amount of water necessary to dissolve," when referring to a volume of solvent, refers to a volume of solvent that will not be capable of dissolving all of a given solute at a specified temperature.

The term "lithium hydroxide" refers to LiOH, either in solution or solid form.

The term "measuring" or to "measure" refers to determining a state or parameter of a system or substance.

A "mixer" can be a component receiving one or more fluids from one or multiple sources that can combine, associate, or otherwise bring the fluids together. The mixer may include components that agitate the fluids to facilitate bringing the one or more fluids together.

The term "mixing" or to "mix" generally refers to causing or more fluids from any source to combine together. For example, "mixing" can include laminar or turbulent flow at a location in a fluid line or a junction. Another example of "mixing" can include receiving one or more fluids in a component configured to receive fluids from one or multiple sources and to mix the fluids together in the component. Additionally, mixing can refer to the dissolution of a solid or solids with a fluid, wherein the solid or solids is dissolved in the fluid.

The term "outlet" can refer to a portion of container, flow path, or component through which fluid, gas, or a combination thereof can be drawn out of the container, flow path, or component.

A "partitioned bag" can be any container having an inlet and an outlet having a separator positioned inside the partitioned bag wherein the partitioned bag can have two or more partitions, compartments, or sections of defined space. For example, the partitioned bag can have a first compartment, section, or space containing a solid material, wherein liquid can be added to the first compartment, section, or space of the partitioned bag through an inlet positioned on one side of the separator in the first compartment, section, or space. The introduced liquid can then dissolve the solid material in the first compartment, section, or space resulting in a liquid solution. The resulting liquid solution can then flow to a second compartment, section, or space separated by, or on another side of the separator of the partitioned bag. The resulting liquid solution can then exit the second compartment, section, or space of the partitioned bag through an outlet positioned on the second compartment, section, or space.

The term "pH sensor" refers to a device for measuring the pH or hydrogen ion concentration of a fluid.

The term "potassium hydroxide" refers to KOH, either in solution or solid form.

The term "potassium hypochlorite" refers to KClO, either in solution or solid form.

The term "predetermined range" can be any range of possible values for a parameter obtained in advance or a priori to actual use in a method.

The term "pump" refers to any device that causes the movement of fluids or gases by applying suction or pressure.

A "receiving compartment" can be a compartment, section, or chamber within a sorbent recharger into which a sorbent module can be positioned to be recharged.

A "recharge solution" or "recharge solutions" can be a solution containing appropriate ions for recharging a specific sorbent material. A recharge solution can be a single solution containing all necessary ions for recharging a sorbent material. Alternatively, the recharge solution can contain some of the ions for recharging the sorbent material, and one or more other recharge solutions can be used to form a composite "recharge solution" to recharge the sorbent material, as described herein.

A "recharge solution source" can be any fluid or concentrate source from which a recharge solution can be stored, obtained, or delivered therefrom.

"Recharging" refers to treating a sorbent material to restore the functional capacity of the sorbent material to put the sorbent material back into a condition for reuse or use in a new dialysis session. In some instances, the total mass, weight and/or amount of "rechargeable" sorbent materials remain the same. In some instances, the total mass, weight and/or amount of "rechargeable" sorbent materials change. Without being limited to any one theory of invention, the recharging process may involve exchanging ions bound to the sorbent material with different ions, which in some instances may increase or decrease the total mass of the system. However, the total amount of the sorbent material will in some instances be unchanged by the recharging process. Upon a sorbent material undergoing "recharging," the sorbent material can then be said to be "recharged."

A "recharging flow path" is a path through which fluid can travel while recharging sorbent material in a reusable sorbent module.

A "salt" is an ionic compound containing a cation component and an anion component.

The term "saturated" refers to a solution having the maximum concentration of at least one solute at a given temperature.

The term "sensor," as used herein, can be a converter of any type that can measure a physical property or quantity of a matter in a solution, liquid or gas, and can convert the measurement into a signal which can be read by an electronic instrument.

The term "sodium hydroxide" refers to NaOH, either in solution or solid form.

The term "sodium hypochlorite" refers to NaClO, either in solution or solid form.

The term "sodium ions" refers to Na+ ions in either in solution or as part of a solid compound.

The term "solid" refers to a material in the solid phase of matter, and can include crystalline, powdered, or any other form of solid material.

A "sorbent cartridge module" or "sorbent module" means a discreet component of a sorbent cartridge. Multiple sorbent cartridge modules can be fitted together to form a sorbent cartridge of two, three, or more sorbent cartridge modules. The "sorbent cartridge module" or "sorbent module" can contain any selected materials for use in sorbent dialysis and may or may not contain a "sorbent material" or adsorbent, but less than the full complement of sorbent materials needed. In other words, the "sorbent cartridge module" or "sorbent module" generally refers to the use of the "sorbent cartridge module" or "sorbent module" in sorbent-based dialysis, e.g., REDY (REcirculating DYalysis), and not that a "sorbent material" that is necessarily contained in the "sorbent cartridge module" or "sorbent module."

A "sorbent recharger" or "recharger" is an apparatus designed to recharge at least one sorbent material.

The term "source" generally refers to any component, reservoir, fluid line, section, or process by which a particular component can enter a system, section, component, or part of a system. The term is given the broadest meaning and includes any type of device or process that can introduce a component.

The term "specified concentration" refers to a concentration of one or more solutes in a solution that is predetermined per the requirements of a system or process.

The term "trichloroisocyanuric acid" refers to C₃Cl₃N₃O₃, either in solution or solid form.

The term "upstream" refers to a position of a first component in a flow path relative to a second component wherein fluid will pass by the first component prior to the second component during normal operation. The first component can be said to be "upstream" of the second component, while the second component is "downstream" of the first component.

A "water source" is a fluid source from which water can be obtained.

"Zirconium oxide" is a sorbent material that removes anions from a fluid, exchanging the removed anions for different anions. Zirconium oxide can also be formed as hydrous zirconium oxide.

"Zirconium phosphate" is a sorbent material that removes cations from a fluid, exchanging the removed cations for different cations.

### Zirconium Oxide Recharge Solution Mixing

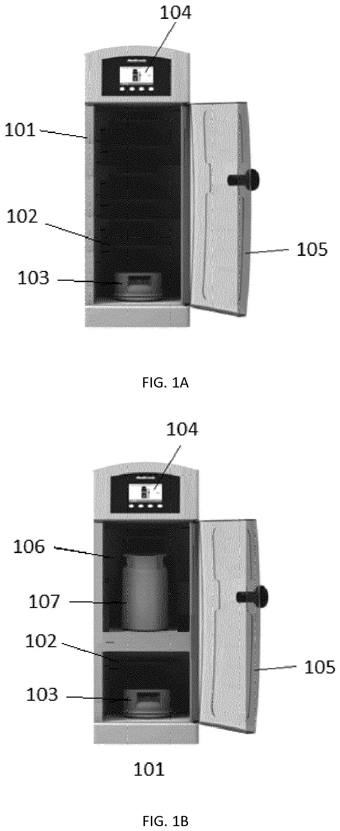

The invention is drawn to systems and methods for recharging and reusing zirconium oxide in a reusable sorbent module. FIG.'s 1A-B illustrate sorbent rechargers for recharging zirconium oxide in a sorbent module. FIG. 1A illustrates a sorbent recharger **101** for recharging zirconium oxide in a zirconium oxide sorbent module **103.** FIG. 1B illustrates a sorbent recharger **101** for recharging both zirconium oxide in a zirconium oxide sorbent module **103** and zirconium phosphate in a zirconium phosphate sorbent module **107.** The zirconium oxide sorbent module **103** can be placed in a receiving compartment **102** of the sorbent recharger **101.** Fluid lines (not shown) are fluidly connectable to an inlet and an outlet of the zirconium oxide sorbent module **103.** The fluid lines are also fluidly connectable to one or more recharge solution sources (not shown). The recharge solution sources contain hydroxide, free chlorine, and/or mixtures thereof. The hydroxide ions in the recharge solution primarily displace phosphate ions bound to the zirconium oxide during treatment and secondarily provide some disinfection properties. The free chlorine can act as a disinfectant to remove biological contaminants from the zirconium oxide in the zirconium oxide sorbent module **103.** The hydroxyl source can include any source of hydroxide ions, including lithium hydroxide, sodium hydroxide, or potassium hydroxide. The free chlorine source can contain any source of free chlorine or combined chlorine, including sodium hypochlorite, potassium hypochlorite, trichloroisocyanuric acid, or chloramine. Chlorine can exist in several oxidation states, including -1 as in NaCl or other ionic compounds, 0 as in Cl₂, +1 as in NaClO, +3 as in NaClCₕ, +4 as in ClO₂, +5 as in NaClO₃, or +7 as in NaClO₄. In certain embodiments, the free chlorine source can contain any compound with chlorine in a +1 oxidation state. A door **105** controls access to the receiving compartment **102** and can be opened to insert or remove the zirconium oxide sorbent module **103** from the receiving compartment **102.** The sorbent recharger **101** can also include a user interface **104** allowing a user to control the recharging of the zirconium oxide sorbent module **103.** A programmable controller (not shown) can control one or more pumps and valves (not shown) in communication with the fluid lines to control the movement of fluid through the recharger and zirconium oxide sorbent module **103.**

As illustrated in FIG. 1B, in certain embodiments the sorbent recharger **101** can include a second receiving compartment **106** for receiving a zirconium phosphate sorbent module **107.** Fluid lines (not shown) are fluidly connectable to an inlet and an outlet of the zirconium phosphate sorbent module **107.** The fluid lines are also fluidly connectable to one or more recharge solution sources (not shown) for recharging the zirconium phosphate. Zirconium phosphate can be recharged using a recharge solution containing sodium ions and an acid. The zirconium phosphate can be recharged using a sodium source, an acid source, an optionally a base or buffer source, such as sodium chloride, sodium acetate, and acetic acid. The recharge solution sources used in recharging the zirconium phosphate sorbent module **107** can contain any combination of sodium salt, acid, and optionally a base. In certain embodiments, one or more of the recharge solutions can be used for recharging both the zirconium phosphate and the zirconium oxide. For example, a water source and a sodium hydroxyl source can be included in both a zirconium oxide recharging flow path and a zirconium phosphate recharging flow path. A single recharge solution source can be fluidly connected to each recharging flow path or separate recharge solution sources can be used for each recharging flow path. One of skill in the art will understand that sorbent rechargers can be constructed with any number of receiving compartments for recharging any number of sorbent modules. A sorbent recharger can include multiple receiving compartments each for recharging zirconium oxide sorbent modules, or multiple receiving compartments for recharging any combination of zirconium oxide and zirconium phosphate sorbent modules.

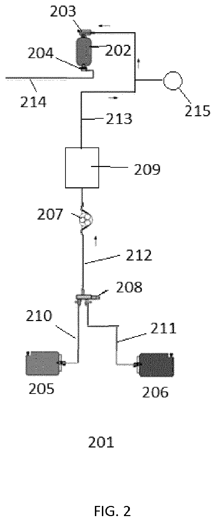

FIG. 2 illustrates a non-limiting embodiment of a recharging flow path **201** for generating a recharge solution and introducing the recharge solution through a zirconium oxide sorbent module **202.** The zirconium oxide sorbent module **202** is fluidly connectable to fluid line **213** through zirconium oxide module inlet **203** and fluidly connectable to effluent line **214** through zirconium oxide module outlet **204.** Recharge solution source **205** can contain a concentrated source of hydroxide and free chlorine. For example, the recharge solution source **205** can contain concentrated sodium hydroxide and sodium hypochlorite. As described, any hydroxyl source and free chlorine source can be used. The hydroxide ion displaces anions, such as phosphate ions, that have been adsorbed by the zirconium oxide during treatment. The free chlorine acts to disinfect the zirconium oxide sorbent module **202.** A pump **207** can pump the concentrated hydroxide and free chlorine solution from recharge solution source **205** through fluid line **210.** Water from water source **206** can be introduced through fluid line **211.** Optional valve **208** controls the movement of fluid from recharge solution source **205** and water source **206** into fluid line **212.** An optional static or dynamic mixer **209** positioned upstream of zirconium oxide sorbent module **202** can mix the water and concentrated hydroxide and free chlorine solution to dilute the solution, generating a recharge solution with a specified concentration of hydroxide and free chlorine. A dynamic mixer can include one or more components that agitate or stir solutions, while a static mixer can use passive mixing that relies on a shape or inherent feature of the fluid compartment or section in which the fluid is being mixed. For example, shaped contours or bends in the fluid compartment or section can provide passive mixing. The introduction of fluid from one source can occur by any differential, displacement, or motive force known to those of skill. For example, a pump can be used to introduce fluid into any one of a fluid line, compartment, or section of any part of the invention. The pumps can be positive or negative displacement pumps using pistons, diaphragms, rollers and the like. The pumps can be operated with controllers and valves to control the rate at which fluid can be introduced, conveyed, or moved from one location to another. The pumps can be pulsatile or non-pulsatile. One of ordinary skill will appreciate that many components, means, devices, and methods are available for introducing fluid from one section to another.

One or more separate pumps can be used to introduce fluid for each of the water and concentrated hydroxide and free chlorine solutions, with the solutions mixed in fluid line **212.** The generated recharge solution can be introduced through fluid line **213** and through the zirconium oxide sorbent module **202** via zirconium oxide module inlet **203.** Effluent can exit the zirconium oxide sorbent module **202** through zirconium oxide module outlet **204** into effluent line **214.** A sensor **215** can be included to measure the concentration of hydroxide and free chlorine entering zirconium oxide sorbent module **202** and ensure that the concentration is within a predetermined range. In certain embodiments, sensor **215** can be a conductivity sensor. Alternatively, sensor **215** can be a pH sensor. A controller (not shown) can control the pump **207** and valve **208** to control the flow rate of water and concentrated hydroxide and free chlorine solution introduced into the fluid line **212** based on a specified concentration of hydroxide and free chlorine in the recharge solution. In certain embodiments, the specified concentration can range from 0.2M to 2.0M, with one preferred concentration of about 0.8 M. The specified concentration of free chlorine can range from about 0.01wt% to 2wt% of sodium hypochlorite with one preferred concentration of about 0.10wt%. One of skill in the art will be able to determine similar ranges for other free chlorine sources to generate the same concentrations of free chlorine in the recharge solutions. If the concentration of hydroxide and free chlorine is outside of the predetermined range, the controller can adjust the flow rates of the water and/or hydroxide and free chlorine solution to adjust the concentration of the recharge solution. Although the recharging flow path **201** is illustrated as having a single pump **207** and single valve **208** in FIG. 2, one of skill in the art will understand that alternative valve and pump arrangements can be used with or without a static or dynamic mixer to generate a recharge solution having a specified concentration of hydroxide and free chlorine from a source of concentrated hydroxide and free chlorine solution and water.

Including the hydroxide and free chlorine sources in the same container can provide an additional benefit of stabilizing hypochlorite, thereby preventing the formation of hypochlorous acid and further breakdown to chlorine gas. Chlorine gas formation would result in potential loss of the chemicals to the system and can be prevented by the mixing the hydroxyl and hypochlorite source.

In certain embodiments, the recharge solution source **205** can be a flexible bag storing enough concentrated sodium hydroxide and sodium hypochlorite for a single recharge of the zirconium oxide. Alternatively, the bag can be semi-rigid or rigid. The bag can be constructed from any appropriate material suitable for retaining a solid and aqueous form of any one of hydroxide and free chlorine sources and similar chemicals. The recharge solution source **205** can also be provided as plastic bottles. The recharge solution source **205** can further be a larger source, storing enough concentrated hydroxide and free chlorine solution for recharging multiple zirconium oxide sorbent modules. The recharge solution source **205** can be premixed and then connected to the sorbent recharger or made at the location of the sorbent recharger. The water source **206,** although shown as a water reservoir in FIG. 2, can alternatively be any source of water, including a municipal water supply. The water source **206** can contain any type of water, including deionized water.

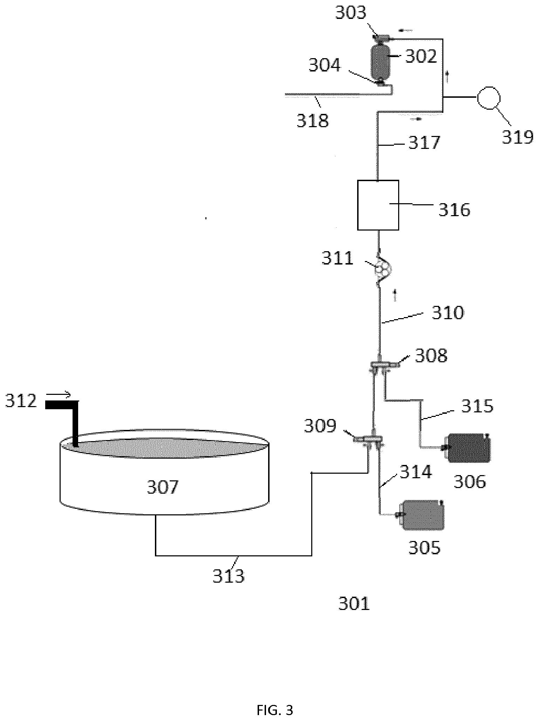

FIG. 3 illustrates an alternative recharging flow path **301.** A zirconium oxide sorbent module **302** is fluidly connectable to fluid line **317** through zirconium oxide module inlet **303** and fluidly connectable to effluent line **318** through zirconium oxide module outlet **304.** To generate a recharge solution, a hydroxide solution from hydroxide tank **307** can be introduced through fluid line **313** to valve **309** and then to valve **308.** Water from water source **305** is introduced through fluid line **314** to valve **309** and then to valve **308.** Concentrated free chlorine solution is introduced from a free chlorine source **306** through fluid line **315** to valve **308.** The recharge solution can be generated by mixing the concentrated free chlorine solution from free chlorine source **306,** the hydroxide solution from hydroxide tank **307,** and water from water source **305.** A controller (not shown) can control the valves **308** and **309** and pump **311** to control the relative flow rates of hydroxide solution, free chlorine solution, and water, generating a recharge solution having a specified concentration of hydroxide and free chlorine. An optional static or dynamic mixer **316** can be positioned upstream of zirconium oxide sorbent module **302** and can be included in fluid line **310** to mix the individual components of the recharge solution. The generated recharge solution is introduced through fluid line **317** to the zirconium oxide sorbent module **302.** A sensor **319** can be included to measure the concentrations of hydroxide and free chlorine in the generated recharge solution, and to ensure that the generated recharge solution has the specified concentration of hydroxide and free chlorine. The sensor **319** can be in communication with the controller, and the controller can determine the hydroxide and free chlorine concentrations based on the data from the sensor **319.** If the concentration of hydroxide and/or free chlorine is outside of the predetermined range, the controller can adjust the flow rates of the water, hydroxide solution, and/or free chlorine solution to adjust the concentration of the recharge solution.

In certain embodiments, the hydroxide solution in hydroxide tank **307** can be a saturated sodium hydroxide solution. Advantageously, using a saturated hydroxide solution can allow for the hydroxide to have a concentration that can be estimated without the need for additional sensors. With a known temperature, the estimation of the saturated solution can be improved. To generate and maintain a saturated hydroxide solution in hydroxide tank **307,** the system or user need only maintain a minimum amount of a solid hydroxyl source within the hydroxide tank **307.** Water can be added to the hydroxide tank **307** by water inlet **312** as needed. If the amount of the solid hydroxyl source in hydroxide tank **307** is too low, additional solid hydroxyl source can be added. A saturated hydroxide solution can be maintained by adding less than an amount of water necessary to dissolve the solid hydroxyl source to hydroxide tank **307.** Further, the heat of dissolution of the solid hydroxide may increase the temperature of the recharge solution, aiding in disinfection of the zirconium oxide sorbent module **302.** Using a separate hydroxide tank **307** and free chlorine source **306** allows for the concentration of hydroxide in the generated recharge solution to be varied independent of the free chlorine concentration. For example, the system can use a high free chlorine concentration and a low hydroxide recharge solution initially for maximal disinfection, and then change to a high hydroxide and low free chlorine concentration to achieve maximal recharging and use the chemicals more efficiently, which can minimize the mass of the recharge solutions necessary.

The hydroxide tank **307** can be any size. In certain embodiments, the hydroxide tank **307** can store enough saturated hydroxide solution for a single recharge of zirconium oxide. Alternatively, the hydroxide tank **307** can be large enough to store hydroxide solution for multiple recharges of zirconium oxide in a single sorbent recharger, or to service multiple sorbent rechargers.

In FIG. 3, fluid line **313** is illustrated as fluidly connected to the hydroxide tank **307** at the bottom of hydroxide tank **307.** However, the fluid line **313** can alternatively be connected to the hydroxide tank **307** at any position, including the top or side. An optional filter (not shown) such as a screen mesh or any other suitable means can be included at the connection of fluid line **313** and hydroxide tank **307** to prevent any solid hydroxide particles from entering fluid line **313.** Although shown as having two three-way valves **308** and **309** and a single pump **311,** one of skill in the art will understand that alternative arrangements can be used to generate the recharge solution from water, a hydroxide solution, and a free chlorine solution, including a system with a single four-way valve, or with multiple pumps.

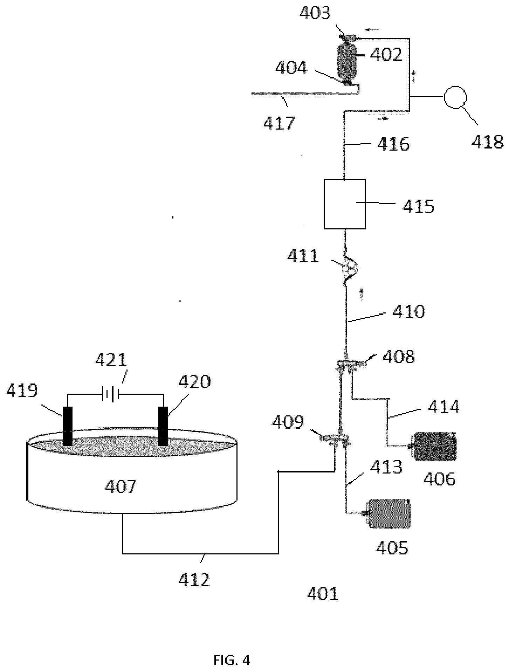

FIG. 4 illustrates an alternative recharging flow path **401** for recharging zirconium oxide in a zirconium oxide sorbent module **402** using an electrolysis system as the hydroxyl source. The electrolysis system includes a tank or reservoir **407** and an electrolytic cell having an anode **419,** cathode **420,** and power source **421.** The reservoir **407** can contain a salt solution, such as sodium chloride or potassium chloride. At the anode **419** chloride ions in the solution are oxidized to form chlorine gas, which can escape from the reservoir **407.** At the cathode **420,** water is reduced to form hydrogen and hydroxide ions, generating a hydroxide solution. A semipermeable membrane (not shown) can be used to separate the anode **419** and cathode **420** in the reservoir **407.** The generated hydroxide solution can be introduced through fluid line **412** to valve **409** and then to valve **408.** To dilute the hydroxide solution, water from water source **405** can be introduced as needed via valve **409** and then to valve **408** through fluid line **413.** A free chlorine solution from a concentrated free chlorine source **406** can be introduced through fluid line **414** to valve **408.**

The recharge solution can be generated by mixing the concentrated free chloride solution from free chloride source **406,** the hydroxide solution from reservoir **407,** and water from water source **405** through fluid line **410.** A sensor **418** can be included to measure the concentration of hydroxide and free chlorine in fluid line **416.** A controller (not shown) in communication with sensor **418** can control the valves **408** and **409** and pump **411** to control the relative flow rates of hydroxide solution, free chlorine solution, and water, generating a recharge solution having a specified concentration of hydroxide and free chlorine. An optional static or dynamic mixer **415** positioned upstream of zirconium oxide sorbent module **402** can be fluidly connected to fluid line **410** to mix the individual components of the recharge solution. The generated recharge solution is introduced through fluid line **416** to the zirconium oxide sorbent module **402** through zirconium oxide module inlet **403.** The recharge solution can exit the zirconium oxide sorbent module **402** through zirconium oxide module outlet **404** into effluent line **417** for disposal. By using an electrolysis system as the hydroxyl source, impurities in the hydroxide solution, such as carbonate, can be eliminated.

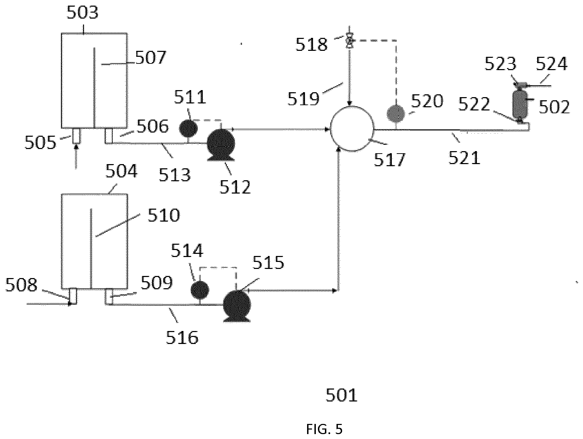

FIG. 5 shows an alternative recharging flow path **501** for recharging zirconium oxide in a zirconium oxide sorbent module **502** using partitioned bags. The recharging flow path **501** can include a hydroxyl source **504,** and a free chlorine source **503.** As described, the hydroxyl source **504** can contain a solid hydroxyl source, such as sodium hydroxide and the free chlorine source **503** can contain a solid free chlorine source, such as potassium hypochlorite or trichloroisocyanuric acid. As shown in FIG. 5, any one or more of the recharge solution sources can be provided in a partitioned bag. A partitioned bag ca be a recharge solution source that initially contains a solid material. Water can then be added to the partitioned bag to dissolve the solid material, generating the recharge solution. The partitioned bag can be flexible, semi-rigid, or rigid. The partitioned bag can be constructed from any appropriate material suitable for retaining a solid and aqueous form of any one of a hydroxide solution, a free chlorine solution, and similar chemicals.

Water from a water source (not shown) can be introduced to the hydroxyl source **504** through water inlet **508.** The water can dissolve the solid hydroxide in the hydroxyl source **504,** and the resulting sodium solution can exit the partitioned bag through solution outlet **509** into fluid line **516.** A separator **510** can be included in hydroxyl source **504** to prevent solids from reaching the solution outlet **509.** Similarly, water can be introduced into free chlorine source **503** by water inlet **505.** The water can dissolve the solid free chlorine within the free chlorine source **503** and exit through solution outlet **506** into fluid line **513.** Separator **507** prevents solids from reaching solution outlet **506** and fluid line **513.** In certain embodiments a liquid free chlorine source can be used, such as chloramine. When a liquid free chlorine source is used, the free chlorine source **503** can be a flexible bag similar to the partitioned bag without a water inlet, a plastic bottle, or any other free chlorine source. Optionally, a mesh or screen can be placed over the solution outlet **506** or solution outlet **509** to prevent solid material from exiting. The optional screen mesh can be used with or without separator **507** or separator **510.**

The hydroxyl source **504** and free chlorine source **503** can be used to generate saturated or concentrated solutions of hydroxide and free chlorine. To generate a saturated hydroxide solution, the system only requires to be maintained at a minimum level of solid hydroxide in hydroxyl source **504.** As water is introduced through water inlet **508,** the water will dissolve the solid hydroxide, forming a saturated hydroxide solution. A saturated free chlorine solution can be generated in the same manner using free chlorine source **503.** Advantageously, using saturated solutions allows for the concentration of sodium or base to be estimated or approximately known based on an assumed temperature.

To generate the recharge solution for recharging the zirconium oxide in zirconium oxide sorbent module **502,** a hydroxide solution from hydroxyl source **504** is introduced to mixer **517** via fluid line **516.** Mixer **517** can be either a dynamic or static mixer. A dynamic mixer includes one or more components that agitate or stir solutions, while a static mixer uses passive mixing. Pump **515** can provide the driving force necessary to move the hydroxide solution through fluid line **516.** A sensor **514** can be included to measure the hydroxide concentration in fluid line **516** and ensure that a saturated solution or solution of known concentration is being introduced into the mixer **517.** A controller (not shown) can receive data from the sensor **514** and adjust the flow rate of hydroxide solution through fluid line **516** if necessary by changing the pump rate of pump **515.** Free chlorine solution is introduced to the mixer **517** through fluid line **513.** Pump **512** can provide the driving force necessary to move the free chlorine solution through fluid line **513.** A sensor **511** can be included to measure the free chlorine concentration in fluid line **513** and ensure that a saturated solution or solution of known concentration is being introduced into the mixer **517.** The controller can receive data from the sensor **511** and adjust the flow rate of the free chlorine solution through fluid line **513** if necessary by changing the pump rate of pump **512.**

In mixer **517,** the hydroxide solution, and free chlorine solutions are mixed. Water from a water source (not shown) can be introduced to mixer **517** to dilute the recharge solution through fluid line **519.** The recharge solution introduced into zirconium oxide sorbent module **502** can have a desired concentration of hydroxide and free chlorine. A controller (not shown) can control the flow rates of hydroxide solution, free chlorine solution, and water introduced to mixer **517** to maintain the concentrations of hydroxide and free chlorine within a predetermined range. The flow rate of hydroxide solution is controlled by pump **515,** the flow rate of the free chlorine solution is controlled by pump **512.** The flow rate of water is controlled by valve **518.** Alternatively, a pump rate of a pump used to introduce water into the mixer **517** can be controlled to dilute the recharge solution to the desired concentration. The sensors illustrated in FIG. 5 can be conductivity sensors, pH sensors, or combinations thereof.

The recharge solution can exit the mixer **517** through fluid line **521** and can be introduced to zirconium oxide sorbent module **502** through zirconium oxide module inlet **522.** A sensor **520** can be used to measure the concentration of hydroxide and free chlorine in fluid line **521.** If the concentration of hydroxide or free chlorine is not within a predetermined range, the controller can adjust the flow rates of the hydroxide solution, the free chlorine solution, and/or water as necessary to maintain the hydroxide and free chlorine concentration in the recharging fluid within a predetermined range of a specified concentration. The recharge solution exits zirconium oxide sorbent module **502** by zirconium oxide module outlet **523** into effluent line **524,** which can be fluidly connected to a drain or waste reservoir. Although illustrated as separate hydroxide and free chlorine solutions in FIG. 5, a single partitioned bag containing solid hydroxide and solid free chlorine can be used. Alternatively, a cartridge containing solid hydroxide or solid free chlorine can be used in place of the partitioned bag. Water can be introduced through the cartridge, dissolving the solid substances to generate the recharge solution.

One of skill in the art will understand that any combination of the described recharge solution sources can be combined. For example, a partitioned bag can be used as the hydroxyl source as illustrated in FIG. 5, while a tank is used as the free chlorine source as illustrated in FIG. 3. Alternatively, an electrolysis system can be used as the hydroxyl source as illustrated in FIG. 4, while a partitioned bag or concentrate tank can be used as the free chlorine source.

One skilled in the art will understand that various combinations and/or modifications and variations can be made in the described systems and methods depending upon the specific needs for operation within the scope of the appended claims.

## Claims

1. A system, comprising:
a sorbent recharger having a recharging flow path comprising at least one receiving compartment for a zirconium oxide sorbent module; the at least one receiving compartment comprising a zirconium oxide module inlet and a zirconium oxide module outlet;
at least one recharge solution source; the at least one recharge solution source comprising a concentrated hydroxyl source and a concentrated free chlorine source fluidly connectable to the recharging flow path;
a controller controlling at least one pump to introduce fluid from the at least one recharge solution source to the zirconium oxide sorbent module;
wherein the recharging flow path is fluidly connectable to a water source upstream of the zirconium oxide module inlet; and
wherein the controller controls a flow rate of hydroxide from said concentrated hydroxyl source and free chlorine from said concentrated free chlorine source and a flow rate of water to generate a recharge solution having a specified concentration of hydroxide and free chlorine.

2. The system of claim 1, wherein the hydroxyl source is a sodium hydroxide, a lithium hydroxide, or a potassium hydroxide, and wherein the free chlorine source is a sodium hypochlorite, potassium hypochlorite, trichloroisocyanuric acid, or chloramine source.

3. The system of any of claims 1-2, further comprising a mixer fluidly connected to the recharging flow path upstream of the zirconium oxide module inlet.

4. The system of any of claims 1-3, wherein the at least one recharge solution source comprises a first recharge solution source of a saturated hydroxide solution and a second recharge solution source of concentrated free chlorine solution; the system further comprising a water source fluidly connectable to the recharging flow path upstream of the zirconium oxide module inlet;
wherein the controller controls a flow rate of water from the water source, a flow rate of free chlorine solution from the second recharge solution source, and a flow rate of hydroxide solution from the first recharge solution source to generate a recharge solution having a specified concentration of hydroxide and free chlorine.

5. The system of claim 4, wherein the first recharge solution source containing saturated hydroxide solution is generated by adding water to a source of a solid hydroxide; wherein an amount of water added to the source of solid hydroxide is less than an amount of water necessary to dissolve all solid hydroxide in the first recharge solution source.

6. The system any of claims 1-3, wherein the at least one recharge solution source comprises a first recharge solution source containing concentrated free chlorine solution and a second recharge solution source comprising an electrolysis system; the electrolysis system generating a hydroxide solution by electrolysis of a salt solution;
wherein the controller controls a flow rate of free chlorine solution from the first recharge solution source, and a flow rate of hydroxide solution from the second recharge solution source to generate a recharge solution having a specified concentration of hydroxide and free chlorine.

7. The system of claim 6, further comprising a water source fluidly connected to the recharging flow path upstream of the zirconium oxide module inlet; the controller further controlling a flow rate of water from the water source to generate the recharge solution having a specified concentration of hydroxide and free chlorine.

8. The system of any of claims 1-7, further comprising at least one sensor in the recharging flow path, the at least one sensor in communication with the controller; the controller measuring a concentration of hydroxide and free chlorine in the recharge solution based on data from the at least one sensor,
preferably wherein the at least one sensor comprises a conductivity sensor, or wherein
the at least one sensor comprises a pH sensor.

9. The system of any of claims 1-8, the sorbent recharger further comprising a second recharging flow path comprising at least a second receiving compartment for a zirconium phosphate sorbent module; the second receiving compartment comprising a zirconium phosphate module inlet and a zirconium phosphate module outlet; and at least a second recharge solution source; the at least second recharge solution source fluidly connected to the second recharging flow path and containing sodium ions and acid.

10. A method, comprising the steps of:
generating a recharge solution of a hydroxide and a free chlorine having a specified concentration of hydroxide and free chlorine; and
recharging zirconium oxide in a zirconium oxide sorbent module by introducing the recharge solution through the zirconium oxide sorbent module.

11. The method of claim 10, wherein the step of generating the recharge solution of hydroxide and free chlorine comprises introducing a concentrated hydroxide and free chlorine solution and water into a recharging flow path; and introducing the recharge solution through the zirconium oxide sorbent module.

12. The method of claim 10, wherein the step of generating the recharge solution of hydroxide and free chlorine comprises introducing a saturated hydroxide solution, a concentrated free chlorine solution, and water into a recharging flow path; and introducing the recharge solution through the zirconium oxide sorbent module.

13. The method of claim 10, wherein the step of generating the recharge solution of hydroxide and free chlorine comprises generating a hydroxide solution by electrolysis in a recharge solution source; introducing the hydroxide solution and a free chlorine solution into a recharging flow path; and introducing the recharge solution through the zirconium oxide sorbent module.

14. The method of any of claims 10-13 wherein the method is carried out by the system of claim 1.

## Patentansprüche

1. System, umfassend:
eine Sorptionsmittelladevorrichtung, die einen Ladeströmungsweg aufweist, umfassend mindestens ein Aufnahmefach für ein Zirkoniumoxidsorptionsmittelmodul; das mindestens eine Aufnahmefach umfassend einen Zirkoniumoxidmoduleinlass und einen Zirkoniumoxidmodulauslass;
mindestens eine Ladelösungsquelle; die mindestens eine Ladelösungsquelle umfassend eine Quelle von konzentriertem Hydroxyl und eine konzentrierte Quelle von freiem Chlor, die mit dem Ladeströmungsweg fluidisch verbindbar ist;
eine Steuerung, die mindestens eine Pumpe steuert, um Fluid aus der mindestens einen Ladelösungsquelle in das Zirkoniumoxidsorptionsmittelmodul einzubringen;
wobei der Ladeströmungsweg mit einer Wasserquelle stromaufwärts des Zirkoniumoxidmoduleinlasses fluidisch verbindbar ist; und
wobei die Steuerung eine Strömungsgeschwindigkeit von Hydroxid aus der Quelle von konzentriertem Hydroxyl und freiem Chlor aus der konzentrierten Quelle von freiem Chlor und eine Strömungsgeschwindigkeit von Wasser steuert, um eine Ladelösung, die eine spezifizierte Konzentration von Hydroxid und freiem Chlor aufweist, zu erzeugen.

2. System nach Anspruch 1, wobei die Hydroxylquelle ein Natriumhydroxid, ein Lithiumhydroxid oder ein Kaliumhydroxid ist und wobei die Quelle von freiem Chlor ein Natriumhypochlorit, Kaliumhypochlorit, Trichlorisocyanursäure oder Chloraminquelle ist.

3. System nach einem der Ansprüche 1 bis 2, ferner umfassend einen Mischer, der mit dem Ladeströmungsweg stromaufwärts des Zirkoniumoxidmoduleinlasses fluidisch verbunden ist.

4. System nach einem der Ansprüche 1 bis 3, wobei die mindestens eine Ladelösungsquelle eine erste Ladelösungsquelle einer gesättigten Hydroxidlösung und eine zweite Ladelösungsquelle von konzentrierter Lösung von freiem Chlor umfasst; das System ferner umfassend eine Wasserquelle, die mit dem Ladeströmungsweg stromaufwärts des Zirkoniumoxidmoduleinlasses fluidisch verbindbar ist;
wobei die Steuerung eine Strömungsgeschwindigkeit von Wasser aus der Wasserquelle, eine Strömungsgeschwindigkeit einer Lösung von freiem Chlor aus der zweiten Ladelösungsquelle und eine Strömungsgeschwindigkeit der Hydroxidlösung aus der ersten Ladelösungsquelle steuert, um eine Ladelösung, die eine spezifizierte Konzentration von Hydroxid und freiem Chlor aufweist, zu erzeugen.

5. System nach Anspruch 4, wobei die erste Ladelösungsquelle, die die gesättigte Hydroxidlösung enthält, durch Hinzufügen von Wasser zu einer Quelle eines festen Hydroxids erzeugt wird; wobei eine Menge an Wasser, die der Quelle des festen Hydroxids hinzugefügt wird, kleiner ist als eine Menge an Wasser, die erforderlich ist, um alle festen Hydroxide in der ersten Ladelösungsquelle aufzulösen.

6. System nach einem der Ansprüche 1 bis 3, wobei die mindestens eine Ladelösungsquelle eine erste Ladelösungsquelle, die eine konzentrierte Lösung von freiem Chlor enthält, und eine zweite Ladelösungsquelle, umfassend ein Elektrolysesystem, umfasst; das Elektrolysesystem eine Hydroxidlösung durch Elektrolyse einer Salzlösung erzeugt;
wobei die Steuerung eine Strömungsgeschwindigkeit der Lösung von freiem Chlor aus der ersten Ladelösungsquelle und eine Strömungsgeschwindigkeit der Hydroxidlösung aus der zweiten Ladelösungsquelle steuert, um eine Ladelösung, die eine spezifizierte Konzentration von Hydroxid und freiem Chlor aufweist, zu erzeugen.

7. System nach Anspruch 6, ferner umfassend eine Wasserquelle, die mit dem Ladeströmungsweg stromaufwärts des Zirkoniumoxidmoduleinlasses fluidisch verbunden ist; wobei die Steuerung ferner eine Strömungsgeschwindigkeit von Wasser aus der Wasserquelle steuert, um die Ladelösung, die eine spezifizierte Konzentration von Hydroxid und freiem Chlor aufweist, zu erzeugen.

8. System nach einem der Ansprüche 1 bis 7, ferner umfassend mindestens einen Sensor in dem Ladeströmungsweg, wobei der mindestens eine Sensor mit der Steuerung in Kommunikation steht; wobei die Steuerung eine Konzentration von Hydroxid und freiem Chlor in der Ladelösung basierend auf Daten von dem mindestens einen Sensor misst,
vorzugsweise wobei der mindestens eine Sensor einen Leitfähigkeitssensor umfasst oder wobei der mindestens eine Sensor einen pH-Sensor umfasst.

9. System nach einem der Ansprüche 1 bis 8, die Sorptionsmittelladevorrichtung ferner umfassend einen zweiten Ladeströmungsweg, umfassend mindestens ein zweites Aufnahmefach für ein Zirkoniumoxidsorptionsmittelmodul; das zweite Aufnahmefach umfassend einen Zirkoniumphosphatmoduleinlass und einen Zirkoniumphosphatmodulauslass; und mindestens eine zweite Ladelösungquelle; wobei die mindestens zweite Ladelösungsquelle mit dem zweiten Ladeströmungsweg fluidisch verbunden ist und Natriumionen und Säure enthält.

10. Verfahren, umfassend die Schritte:
Erzeugen einer Ladelösung eines Hydroxids und eines freien Chlors, die eine spezifizierte Konzentration von Hydroxid und freiem Chlor aufweist; und
Laden von Zirkoniumoxid in einem Zirkoniumoxidsorptionsmittelmodul durch Einbringen der Ladelösung durch das Zirkoniumoxidsorptionsmittelmodul.

11. Verfahren nach Anspruch 10, wobei der Schritt des Erzeugens der Ladelösung von Hydroxid und freiem Chlor das Einbringen eines konzentrierten Hydroxids und der Lösung von freiem Chlor und Wasser in einen Ladeströmungsweg; und das Einbringen der Ladelösung durch das Zirkoniumoxidsorptionsmittelmodul umfasst.

12. Verfahren nach Anspruch 10, wobei der Schritt des Erzeugens der Ladelösung von Hydroxid und freiem Chlor das Einbringen einer gesättigten Hydroxidlösung, einer konzentrierten Lösung von freiem Chlor und von Wasser in einen Ladeströmungsweg; und das Einbringen der Ladelösung durch das Zirkoniumoxidsorptionsmittelmodul umfasst.

13. Verfahren nach Anspruch 10, wobei der Schritt des Erzeugens der Ladelösung von Hydroxid und freiem Chlor das Erzeugen einer Hydroxidlösung durch Elektrolyse in einer Ladelösungquelle; das Einbringen der Hydroxidlösung und einer Lösung von freiem Chlor in einen Ladeströmungsweg; und das Einbringen der Ladelösung durch das Zirkoniumoxidsorptionsmittelmodul umfasst.

14. Verfahren nach einem der Ansprüche 10 bis 13, wobei das Verfahren durch das System nach Anspruch 1 durchgeführt wird.

## Revendications

1. Système, comprenant :
un rechargeur de sorbant ayant un trajet d'écoulement de recharge comprenant au moins un compartiment de réception pour un module de sorbant d'oxyde de zirconium ; l'au moins un compartiment de réception comprenant une entrée de module d'oxyde de zirconium et une sortie de module d'oxyde de zirconium ;
au moins une source de solution de recharge ; l'au moins une source de solution de recharge comprenant une source concentrée d'hydroxyle et une source concentrée de chlore libre pouvant être raccordée fluidiquement au trajet d'écoulement de recharge ;
un dispositif de commande commandant au moins une pompe pour introduire du fluide depuis l'au moins une source de solution de recharge dans le module de sorbant d'oxyde de zirconium ;
dans lequel le trajet d'écoulement de recharge peut être raccordé fluidiquement à une source d'eau en amont de l'entrée de module d'oxyde de zirconium ; et
dans lequel le dispositif de commande commande un débit d'hydroxyde depuis ladite source concentrée d'hydroxyle et de chlore libre depuis ladite source concentrée de chlore libre et un débit d'eau pour générer une solution de recharge ayant une concentration spécifiée en hydroxyde et chlore libre.

2. Système selon la revendication 1, dans lequel la source d'hydroxyle est un hydroxyde de sodium, un hydroxyde de lithium, ou un hydroxyde de potassium, et dans lequel la source de chlore libre est une source d'hypochlorite de sodium, d'hypochlorite de potassium, d'acide trichloroisocyanurique, ou de chloramine.

3. Système selon l'une quelconque des revendications 1 et 2, comprenant en outre un mélangeur raccordé fluidiquement au trajet d'écoulement de recharge en amont de l'entrée de module d'oxyde de zirconium.

4. Système selon l'une quelconque des revendications 1 à 3, dans lequel l'au moins une source de solution de recharge comprend une première source de solution de recharge d'une solution saturée d'hydroxyde et une seconde source de solution de recharge de solution concentrée de chlore libre ; le système comprenant en outre une source d'eau pouvant être raccordée fluidiquement au trajet d'écoulement de recharge en amont de l'entrée de module d'oxyde de zirconium ;
dans lequel le dispositif de commande commande un débit d'eau de la source d'eau, un débit de solution de chlore libre depuis la seconde source de solution de recharge, et un débit de solution d'hydroxyde depuis la première source de solution de recharge pour générer une solution de recharge ayant une concentration spécifiée en hydroxyde et chlore libre.

5. Système selon la revendication 4, dans lequel la première source de solution de recharge contenant une solution saturée d'hydroxyde est générée en ajoutant de l'eau à une source d'un hydroxyde solide ; dans lequel une quantité d'eau ajoutée à la source d'hydroxyde solide est inférieure à une quantité d'eau nécessaire pour dissoudre tout l'hydroxyde solide dans la première source de solution de recharge.

6. Système selon l'une quelconque des revendications 1 à 3, dans lequel l'au moins une source de solution de recharge comprend une première source de solution de recharge contenant une solution concentrée de chlore libre et une seconde source de solution de recharge comprenant un système d'électrolyse ; le système d'électrolyse générant une solution d'hydroxyde par électrolyse d'une solution saline ;
dans lequel le dispositif de commande commande un débit de solution de chlore libre depuis la première source de solution de recharge, et un débit de solution d'hydroxyde depuis la seconde source de solution de recharge pour générer une solution de recharge ayant une concentration spécifiée en hydroxyde et chlore libre.

7. Système selon la revendication 6, comprenant en outre une source d'eau raccordée fluidiquement au trajet d'écoulement de recharge en amont de l'entrée de module d'oxyde de zirconium ; le dispositif de commande commandant en outre un débit d'eau depuis la source d'eau pour générer la solution de recharge ayant une concentration spécifiée en hydroxyde et chlore libre.

8. Système selon l'une quelconque des revendications 1 à 7, comprenant en outre au moins un capteur dans le trajet d'écoulement de recharge, l'au moins un capteur étant en communication avec le dispositif de commande ; le dispositif de commande mesurant une concentration en hydroxyde et chlore libre dans la solution de recharge sur la base de données provenant de l'au moins un capteur,
de préférence dans lequel l'au moins un capteur comprend un capteur de conductivité, ou dans lequel l'au moins un capteur comprend un capteur de pH.

9. Système selon l'une quelconque des revendications 1 à 8, le rechargeur de sorbant comprenant en outre un second trajet d'écoulement de recharge comprenant au moins un second compartiment de réception pour un module de sorbant de phosphate de zirconium ; le second compartiment de réception comprenant une entrée de module de phosphate de zirconium et une sortie de module de phosphate de zirconium ; et au moins une seconde source de solution de recharge ; l'au moins seconde source de solution de recharge étant raccordée fluidiquement au second trajet d'écoulement de recharge et contenant des ions sodium et de l'acide.

10. Procédé, comprenant les étapes consistant à :
générer une solution de recharge d'un hydroxyde et d'un chlore libre ayant une concentration spécifiée en hydroxyde et chlore libre ; et
recharger en oxyde de zirconium dans un module de sorbant d'oxyde de zirconium en introduisant la solution de recharge à travers le module de sorbant d'oxyde de zirconium.

11. Procédé selon la revendication 10, dans lequel l'étape consistant à générer la solution de recharge d'hydroxyde et de chlore libre comprend l'introduction d'une solution concentrée d'hydroxyde et de chlore libre et de l'eau dans un trajet d'écoulement de recharge ; et l'introduction de la solution de recharge à travers le module de sorbant d'oxyde de zirconium.

12. Procédé selon la revendication 10, dans lequel l'étape consistant à générer la solution de recharge d'hydroxyde et de chlore libre comprend l'introduction d'une solution saturée d'hydroxyde, d'une solution concentrée de chlore libre, et d'eau dans un trajet d'écoulement de recharge ; et l'introduction de la solution de recharge à travers le module de sorbant d'oxyde de zirconium.

13. Procédé selon la revendication 10, dans lequel l'étape consistant à générer la solution de recharge d'hydroxyde et de chlore libre comprend la génération d'une solution d'hydroxyde par électrolyse dans une source de solution de recharge ; l'introduction de la solution d'hydroxyde et d'une solution de chlore libre dans un trajet d'écoulement de recharge ; et l'introduction de la solution de recharge à travers le module de sorbant d'oxyde de zirconium.

14. Procédé selon l'une quelconque des revendications 10 à 13, dans lequel le procédé est mis en oeuvre par le système selon la revendication 1.
